# EUROPÄISCHE PATENTSCHRIFT

(11) **EP 1 377 763 B1**
(45) Veröffentlichungstag und Bekanntmachung des Hinweises auf die Patenterteilung: **05.04.2006**
(21) Anmeldenummer: 02735248.3
(22) Anmeldetag: 12.04.2002
(51) Int. Cl.: F16G 13/16

(54) **VERFAHREN ZUR HERSTELLUNG EINES KETTENGLIEDES SOWIE KETTENGLIED EINER ENERGIEFÜHRUNGSKETTE**
METHOD FOR PRODUCING A CHAIN LINK, AND A CORRESPONDING CHAIN LINK OF A CABLE DRAG CHAIN
PROCEDE DE FABRICATION D'UN MAILLON DE CHAINE ET MAILLON D'UNE CHAINE DE GUIDAGE D'ELEMENTS DE TRANSPORT D'ENERGIE

(30) Priorität: 12.04.2001 DE 10118328
(43) Veröffentlichungstag der Anmeldung: 07.01.2004
(73) Patentinhaber: Kabelschlepp GmbH, 57074 Siegen (DE)
(72) Erfinder: WEBER, Willibald, 57399 Kirchhundem (DE); WEHLER, Herbert, 57290 Neunkirchen (DE)
(74) Vertreter: Neumann, Ditmar
(86) Internationale Anmeldenummer: PCT/EP2002/004077
(87) Internationale Veröffentlichungsnummer: WO 2002/084147

(56) Entgegenhaltungen:
- WO-A-95/28273
- DE-A- 4 313 075
- US-A- 4 570 437

## Beschreibung

Der Gegenstand der Erfindung bezieht sich auf ein Verfahren zur Herstellung eines Kettengliedes sowie auf ein Kettenglied einer Energieführungskette.

Durch die DE 43 13 075 A1 ist ein Kettenglied für eine Energieführungskette bekannt, das zwei voneinander beabstandete einander gegenüberliegende Kettenlaschen aufweist. Die Kettenlaschen sind durch eine Traverse miteinander verbunden. Die Verbindung der Traverse mit den Laschen erfolgt mittels lösbarer Scharniere. Die Traverse ist mit den Laschen verrastbar. Hierzu weist die Traverse nach der DE 43 13 075 A1 Rastmittel auf, die mit entsprechenden Rastmitteln der Kettenlasche zusammenwirken. Im konkreten wird durch die DE 43 13 075 A1 vorgeschlagen, dass die Traverse beidseitig jeweils Ansätze aufweist, die mit im Querschnitt runden Lagerzapfen verbunden sind. Die Kettenlaschen weisen Schlitze zur Aufnahme der Ansätze auf. Im Bereich der Schlitze haben die Seitenlaschen Ausnehmungen zur rastenden Aufnahme und Führung der Lagerzapfen. Durch diese Ausgestaltung der Scharniere wird ein Verschwenken der Traverse um 180° ermöglicht, wobei die Traverse in jeder beliebigen Stellung abnehmbar ist.

Durch die DE 33 18 365 C2 ist eine weitere Ausführungsform eines Kettengliedes für eine Energieführungskette bekannt. Das Kettenglied hat zwei voneinander beabstandete einander gegenüberliegende Kettenlaschen, die über einen Schließbügel miteinander verbunden sind. Der Schließbügel ist an einer Kettenlasche mit einem lösbaren Scharnier angelenkt und an der anderen Kettenlasche mit einem elastischen Haken verriegelbar. Zur Ausgestaltung des Scharniers schlägt die DE 33 18 565 C2 vor, dass dieses aus einer in die freie Kante einer Seitenlasche freiliegenden eingeformten Gelenkachse mit senkrecht zu den Kettenlaschen abgeflachten Kreisquerschnitt und abgerundeten Schmalseiten und aus einer in das Ende des Schließbügels eingeformten, mit Hinterschneidungen versehenen, angeschnittenen, teilkreisförmigen Ausnehmungen besteht. Durch diese Ausgestaltung des Schließbügels wird die Möglichkeit geschaffen, dass nach dem Aufstecken des Schließbügels auf die Achse und Verschwenken in Richtung auf die gegenüberliegende Kettenlasche der Schließbügel kraft- und formschlüssig mit der Gelenkachse verspannt ist. Ein solcher Schließbügel ist einseitig verschwenkbar.

Durch die WO 95/28273 ist ein Kettenglied aus Kunststoff für eine Energieführungskette bekannt. Das Kettenglied ist gebildet durch zwei beabstandete Laschen. Diese sind durch einen oberen und einen unteren Quersteg miteinander verbunden. Einer der Querstege ist gelenkig mit einer Lasche verbunden. Dieser Quersteg ist unverlierbar mit der Lasche verbunden. Zur Ausbildung der Gelenkverbindung werden zunächst die einzelnen Teile des Kettengliedes bereitgestellt. Der Quersteg weist einen Gelenkkopf auf, von dem sich gabeltörmig eine erste Zunge und eine zweite Gabelzunge erstrecken. Die gabelförmigen Zungen verlaufen an ihren Innenseiten im wesentlichen parallel zueinander. Der Gelenkkopf mit den angeformten Zungen hat dabei eine Kehlung, die dem Umfangsquerschnitt eines Bolzens entspricht. Zur Ausbildung der Gelenkverbindung wird der Gelenkkopf mit den Zungen und dem Bolzen zusammengefügt. Mittels eines Fixierwerkzeugs, das in seiner Form der zu bildenden Verbindung angepasst ist, wird dieses an die Enden der Zungen herangeführt. Durch Einwirkung einer Kraft auf das Fixierwerkzeug und gegebenenfalls unter Wärmeeinwirkung, werden die Zungen derart verformt, dass sich ihre Enden aufeinander zu bewegen. Auf diese Weise wird ein Umschließen des Bolzens durch die Zungen erreicht. Die Zungen werden dabei so aufeinander zu verformt, dass sie sich berühren und schließlich miteinander verbinden. Durch die Verbindung wird der Bolzen vollständig von dem Gelenkkopf umschlossen.

Hiervon ausgehend liegt der vorliegenden Erfindung die Zielsetzung zugrunde, ein Verfahren anzugeben, welches leichter durchführbar ist, wobei die Anzahl der zu handhabenden Teile verringert werden soll. Ein weiteres Ziel der Erfindung ist es, ein Kettenglied anzugeben, welches wenigstens einen unverlierbar mit einer Lasche verbundenen Quersteg aufweist, wobei das Kettenglied leicht herstellbar ist.

Diese Zielsetzungen werden durch das erfindungsgemäße Verfahren nach Anspruch 1 bzw. durch das erfindungsgemäße Kettenglied nach Anspruch 14 erreicht. Weitere vorteilhafte Ausbildungen und Ausgestaltungen des Verfahrens bzw. des Kettengliedes sind Gegenstand der jeweils abhängigen Ansprüche.

Das erfindungsgemäße Verfahren zur Herstellung eines Kettengliedes aus Kunststoff, das zueinander beabstandete Laschen und diese verbindende untere und obere Querstege aufweist, zeichnet sich dadurch aus, dass wenigstens ein Quersteg gelenkig mit einer der Laschen verbunden ist, wobei wenigstens eine der Laschen gebildet und danach wenigstens einer der Querstege bei gleichzeitiger Ausformung einer Gelenkverbindung zwischen einer der Laschen und einem der Querstege gebildet wird.

Durch diese erfindungsgemäße Verfahrensführung wird in Abkehr zu der aus der WO 95/28273 bekannten Produktherstellung erreicht, dass auf eine besondere Ausgestaltung des Querstegs mit Zungen verzichtet werden kann. Des weiteren sind keine zur Umformung der Zungen und zur Ausbildung der Gelenkverbindung notwendigen zusätzlichen Schritte vorgesehen. Das erfindungsgemäße Verfahren kann mittels einfacher Werkzeuge durchgeführt werden.

Nach einer vorteilhaften Ausgestaltung des Verfahrens wird vorgeschlagen, dass zunächst eine Lasche mit einer Gelenkachse gebildet wird, die während der Ausbildung des Steges über einen Umfangswinkel, der größer ist als 80 °, von diesem umgeben wird. Laschen, die eine Gelenkachse aufweisen, sind an und für sich bekannt. Die prinzipielle Konstruktion der Laschen kann daher zur Verwirklichung der erfindungsgemäßen Verfahrensführung herangezogen werden. Es bedarf daher keiner grundlegenden Veränderung der Konstruktion der Laschen, um das erfindungsgemäße Verfahren durchzuführen. Vorzugsweise ist die Gelenkachse in einer Ausnehmung ausgebildet.

Gemäß einer noch weiteren vorteilhaften Ausgestaltung des Verfahrens wird vorgeschlagen, dass zunächst eine Lasche mit wenigstens einer sich in Längsrichtung der Lasche erstreckenden Gelenkaufnahme gebildet wird. Diese Gelenkaufnahme ist vorzugsweise im Querschnitt teilkreisförmig, so dass in der Gelenkaufnahme während der Ausbildung des Querstegs wenigstens ein Gelenkzapfen ausgeformt werden kann. Hierbei werden die Werkstoffe, aus denen die Laschen bzw. die Querstege bevorzugt hergestellt werden, vorzugsweise so ausgewählt, dass diese sich nicht miteinander verbinden. Durch diese Maßnahme wird sichergestellt, dass eine Schwenkbewegung des Querstegs relativ zur Lasche ermöglicht wird.

Gemäß einer noch weiteren vorteilhaften Ausgestaltung des Verfahrens wird vorgeschlagen, dass die Lasche in einem Querschnitt eine teilkreisförmige Gelenkaufnahme aufweist, deren Umgangswinkel größer 180 Grad und kleiner 360 ° ist. Insbesondere wird vorgeschlagen, dass der Umfangswinkel bei ca. 270 ° liegt.

Gemäß einer noch weiteren vorteilhaften Ausgestaltung des Verfahrens wird angeregt, dass die Lasche gegenüberliegende Gelenkaumahmen aufweist, in denen während der Ausbildung des Steges jeweils ein Gelenkzapfen ausgeformt wird.

Zur Verringerung der Anzahl der zu handhabenden Teile eines Kettengliedes wird gemäß einer noch weiteren vorteilhaften Ausbildung des Verfahrens vorgeschlagen, dass die Laschen und ein Quersteg als ein einstückiges U-förmiges Teil ausgebildet werden.

Zur Verringerung der Produktionskosten sowie des konstruktiven Aufwandes eines Kettengliedes wird vorgeschlagen, dass die Laschen und/oder die Querstege gleich ausgebildet sind.

Die Herstellung eines Kettengliedes erfolgt vorzugsweise in der Art, dass der wenigstens eine Quersteg nach dem Zweikomponenten-Spritzverfahren unter gleichzeitiger Ausformung der Gelenkverbindung zwischen einer der Laschen und einem der Querstege gebildet wird. Das Zweikomponenten-Spritzverfahren kann dabei in einer einzigen Maschine durchgeführt werden.

Nach einer noch weiteren vorteilhaften Ausbildung des Verfahrens wird vorgeschlagen, dass die Laschen und/oder wenigstens ein Quersteg mindestens teilweise aus unterschiedlichen Kunststoffen gebildet werden. Vorzugsweise bestehen die Laschen und gegebenenfalls ein Quersteg aus einem Kunststoff ausgewählt aus der Gruppe der Polyamide. Zur Erhöhung der Stabilität der Laschen und gegebenenfalls des U-förmigen Teils wird vorgeschlagen, dass diese aus einem Polyamid hergestellt werden, der mit einer Glasfaserverstärkung versehen ist.

Die Laschen und gegebenenfalls der Quersteg kann vorzugsweise aus einem Kunststoff hergestellt werden, der aus der Gruppe der Polyacetale ausgewählt ist. Insbesondere handelt es sich bei dem Kunststoff um POM.

Nach einem noch weiteren erfinderischen Gedanken wird ein Kettenglied aus Kunststoff für eine Energieführungskette, das zueinander beabstandete Laschen und diese verbindende untere und obere Querstege aufweist, wobei wenigstens ein Quersteg gelenkig mit einer der Laschen verbunden ist, vorgeschlagen, wobei ein Abschnitt des Querstegs ein an der Lasche ausgebildete Gelenkachse nahtlos umgibt. Durch diese Maßnahme ist der Quersteg, unverlierbar mit der Lasche verbunden. Dadurch, dass die Lasche und der Quersteg nahtlos miteinander verbunden sind, können auf den Quersteg höhere Kräfte einwirken, ohne dass sich der Quersteg von der Lasche löst. Das erfindungsgemäße Kettenglied ist insbesondere zur Ausbildung einer Energieführungskette mit sehr kleinen Kettengliedern geeignet.

Nach einer noch weiteren vorteilhaften Ausbildung eines Kettengliedes aus Kunststoff wird vorgeschlagen, dass wenigstens ein Abschnitt eines Querstegs bei gleichzeitiger Ausformung einer Gelenkverbindung mit einer der Laschen gebildet ist.

Vorzugsweise umgibt der Abschnitt eine Gelenkachse der Lasche über einen Umfangswinkel, der größer ist als 180 °.

Gemäß einer noch weiteren vorteilhaften Ausbildung des Kettengliedes wird vorgeschlagen, dass eine Lasche wenigstens eine sich in Längsrichtung der Lasche erstreckende Gelenkaufnahme aufweist, in die ein Gelenkzapfen hineinragt, der während der Ausbildung des Quersteges ausgeformt wird.

Insbesondere wird vorgeschlagen, dass das Kettenglied mit einer Lasche ausgebildet wird, die zwei gegenüberliegende Gelenkaufnahmen hat. In jede der Gelenkaufnahmen ragt ein Gelenkzapfen hinein, wobei die Gelenkzapfen während der Ausbildung des Quersteges geformt sind.

Vorzugsweise ist das Kettenglied durch einen Quersteg gebildet, der gelenkig mit einer der Laschen verbunden ist. Diese Lasche ist über einen weiteren Quersteg mit der zweiten Lasche verbunden, wobei die Laschen und der Quersteg ein U-formiges Bauteil bilden.

Gemäß einer noch weiteren vorteilhaften Ausbildung des Kettengliedes wird vorgeschlagen, dass der wenigstens eine Quersteg nach dem Zweikomponenten-Spritzverfahren unter gleichzeitiger Ausformung der Gelenkverbindung zwischen einer der Laschen und einem der Querstege gebildet ist.

Nach einer noch weiteren vorteilhaften Ausgestaltung des Kettengliedes wird vorgeschlagen, dass die Laschen und der wenigstens eine Quersteg mindestens teilweise aus unterschiedlichen Kunststoffen gebildet sind. Insbesondere wird vorgeschlagen, dass die Laschen und gegebenenfalls ein Quersteg aus einem Kunststoff ausgewählt aus der Gruppe der Polyamide gebildet sind.

Nach einer noch weiteren vorteilhaften Ausbildung des Kettengliedes sind die Laschen und gegebenenfalls ein Quersteg aus einem Kunststoff ausgewählt aus der Gruppe der Polyacetale gebildet.

Weitere Einzelheiten und Vorteile des Verfahrens sowie des erfindungsgemäßen Kettengliedes werden anhand der in der Zeichnung dargestellten Ausführungsbeispiele erläutert.

Es zeigen:
- Figur 1: schematisch in einer Vorderansicht ein erstes Ausführungsbeispiel eines Kettengliedes,
- Figur 2: eine Schnittdarstellung entlang der Linie A-A der Figur 1,
- Figur 3: ein U-förmiges Kettengliedteil,
- Figur 4: ein weiteres Ausführungsbeispiel eines Kettengliedes im Schnitt, entlang der Schnittlinien B - B nach Fig. 5,
- Figur 5: eine Vorderansicht eines Kettengliedes,
- Figur 6: perspektivisch ein U-förmiges Kettengliedteil des Kettengliedes nach Fig. 5,
- Figur 7: das Kettenglied nach Fig. 5 in einer perspektivischen Ansicht,
- Figur 8: ein weiteres Ausführungsbeispiel in einer perspektivischen Ansicht von oben,
- Figur 9: das Kettenglied nach Fig. 8 in einer perspektivischen Ansicht von unten,
- Figur 10: eine Ausführungsform einer Lasche eines Kettengliedes,
- Figur 11: eine Schnittdarstellung entlang der Schnittlinie A - A nach Fig. 10 und
- Figur 12: eine Schnittdarstellung der Lasche nach Fig. 10 mit einem Quersteg.

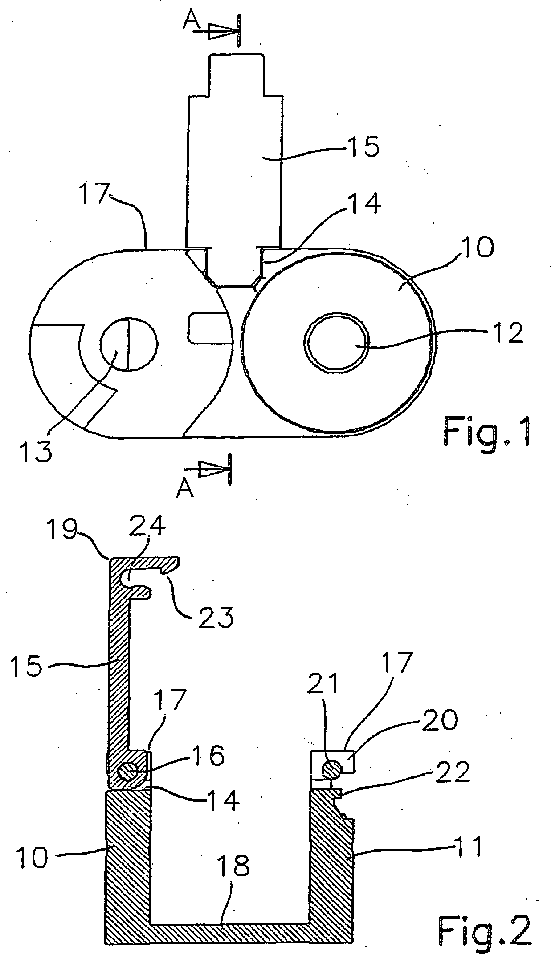

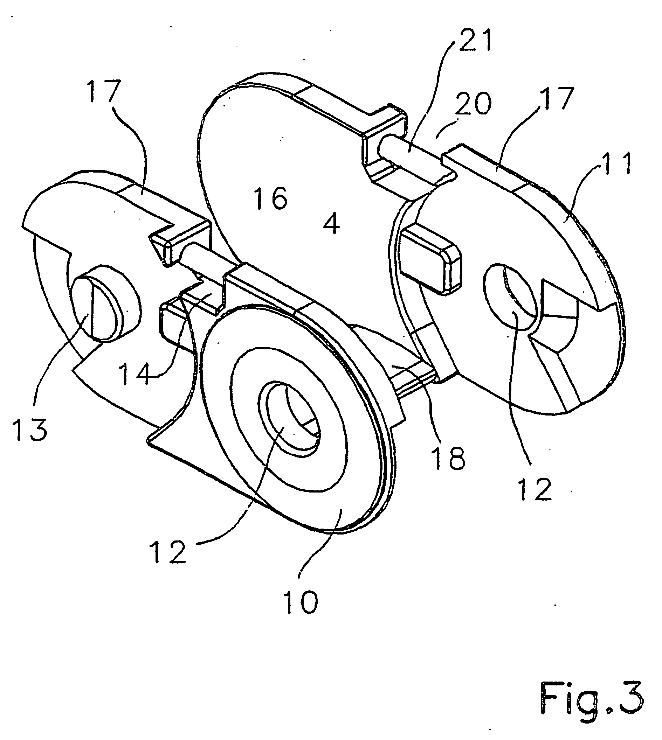

Figuren 1 bis 3 zeigen ein erstes Ausführungsbeispiel eines erfindungsgemäßen Kettengliedes. Hierbei zeigt die Fig. 3 schematisch und in einer perspektivischen Darstellung ein U-förmiges Kettengliedteil.

Das Kettenglied ist aus Kunststoff hergestellt. Es ist für eine Energieführungskette vorgesehen, die aus einer Vielzahl solcher Kettenglieder bestehen kann. Das Kettenglied weist zwei zueinander beabstandete Laschen 10, 11 auf. In dem dargestellten Ausführungsbeispiel sind die Laschen 10, 11 mittels eines unteren starren Querstegs 18 miteinander verbunden. Jede Lasche 10, 11 weist an einem Endbereich eine Bohrung 12 auf. In dem gegenüberliegenden Endbereich der Laschen ist jeweils ein Zapfen 13 vorgesehen. Die Bohrungen 12 bzw. die Zapfen 13 der Kettenlaschen 10, 11 sind so ausgebildet, dass ein Zapfen 13 in die Bohrung 12 einer Kettenlasche eines benachbarten Kettengliedes eingebracht werden kann, so dass mehrere Kettenlaschen miteinander verbunden werden, die einen Strang bilden. Diese Ausbildung einer Energieführungskette ist an für sich bekannt.

Ausgehend vom Rand 17 der Lasche 10 und quer zur Längserstreckung der Lasche 10 ist eine Ausnehmung 14 vorgesehen. Innerhalb der Ausnehmung 14 ist eine körperlich ausgebildete Gelenkachse 16 vorhanden, die einen Bestandteil der Lasche 10 bildet. Die Gelenkachse 16 weist einen kreisförmigen Querschnitt auf, wie dies aus der Figur 2 ersichtlich ist.

Mit der Lasche 1 ist ein Quersteg 15 gelenkig verbunden. Figur 2 zeigt, dass ein Abschnitt des Quersteges 15 die Gelenkachse 16 nahtlos umgibt.

Der Quersteg 15 weist an seinem freien Ende einen Haken 19 auf. Der Haken 19 weist eine Hakennase 23 sowie eine Bolzenaufnahme 24 auf.

Ausgehend vom Längsrand 17 der Lasche 11 und quer zur Längserstreckung der Lasche 11 ist eine Hakenaufnahme 20 vorgesehen. Die Hakenaufnahme 20, wie sie insbesondere aus der Fig. 3 ersichtlich ist, weist einen in Längsrichtung der Lasche 11 verlaufenden Bolzen 21 auf. In der außenliegenden Wand der Lasche 11 ist ein Vorsprung 22 vorgesehen.

Der Quersteg 15 ist um die Gelenkachse verschwenkbar. Im geschlossenen Zustand des Kettengliedes greift der Bolzen 21 in die Bolzenaufnahme 24 des Hakens 19. Unterhalb des Bolzens 21 ist der Vorsprung 22 ausgebildet, der mit der Hakennase 23 zusammenwirkt, so dass der Quersteg 15 lösbar mit der Lasche 11 verbindbar ist. Durch den Bolzen 21, der im geschlossenen Zustand in die Bolzenaufnahme 24 eingreift, wird verhindert, dass ein unbeabsichtigtes Öffnen des Querstegs 16 eintritt, wenn die Laschen 10,11 relativ zueinander bewegt werden.

Das in den Figuren 1 und 2 dargestellte Kettenglied kann wie folgt hergestellt werden:

Zunächst werden die Laschen des Kettengliedes gebildet. Hierbei weist zumindest die Lasche 10 eine Gelenkachse 16 auf. Danach wird der Quersteg 15 bei gleichzeitiger Ausformung einer Gelenkverbindung zwischen der Lasche 10 und dem Quersteg 15 gebildet.

Das in den Fig. 1 bis 3 dargestellte Kettenglied weist ein U-förmiges Kettengliedteil, das durch die Laschen 10, 11 und den Quersteg 18 gebildet ist. Dies ist nicht zwingend notwendig. Der Quersteg 18 kann auch lösbar mit den Laschen 10, 11 verbunden sein.

Es besteht auch die Möglichkeit an einer der beiden Laschen jeweils zwei gelenkig mit der Lasche verbundene Querstege vorzusehen. Diese Querstege sind dann mit der gegenüberliegenden Lasche verbindbar. Es besteht auch die Möglichkeit, die Lasche 11 mit einem Quersteg 15 auszubilden, der gelenkig mit der Lasche 11 verbunden ist.

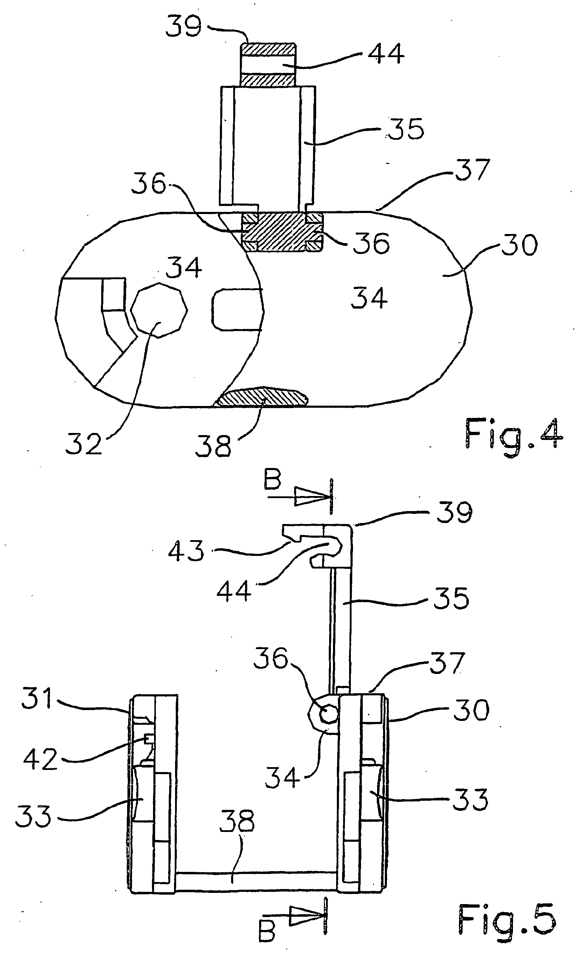

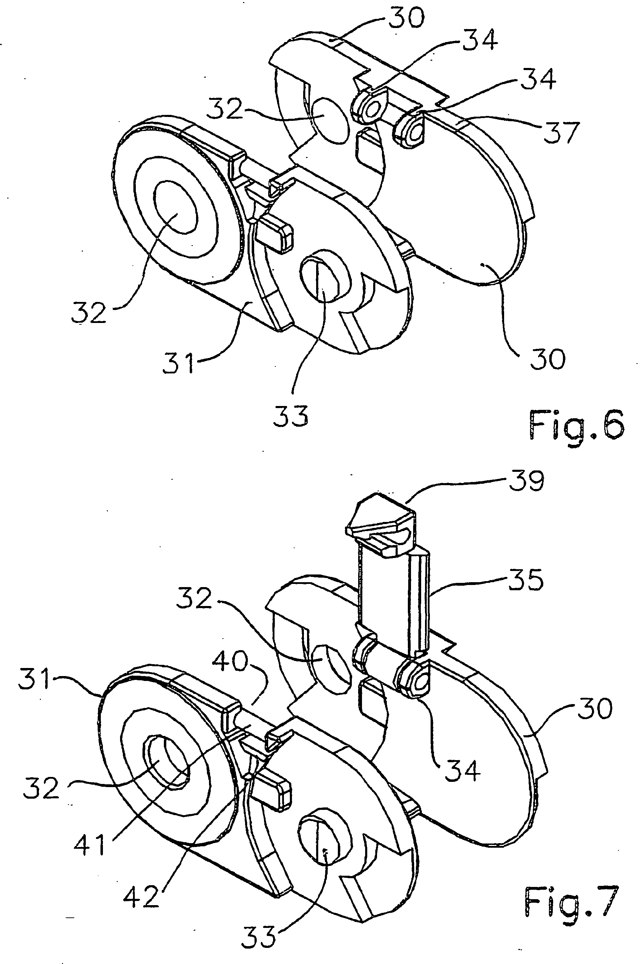

Fig. 4 bis 7 zeigen ein weiteres Ausführungsbeispiel eines erfindungsgemäßen Kettengliedes.

Das in den Fig. 4 bis 7 dargestellte Kettenglied weist ein U-förmig ausgebildetes Kettengliedteil auf. Das Kettenglied weist zwei zueinander beabstandete Laschen 30, 31 auf. Die Laschen 30, 31 sind durch einen unteren Quersteg 38 miteinander verbunden.

Jede Lasche 30, 31 weist in einem Endbereich der Lasche jeweils eine Bohrung 32 auf. In dem gegenüberliegenden Endbereich ist jeweils ein Zapfen 33 ausgebildet. Die Bohrungen 32 und die Zapfen 33 eines Kettengliedes bilden die Möglichkeit der gelenkigen Verbindung mit weiteren Kettengliedern, so dass diese eine Energieführungskette bilden.

Das Kettenglied weist einen oberen gelenkig mit der Lasche 30 verbundenen Quersteg 35 auf Zur gelenkigen Verbindung weist die Lasche 30 Gelenkaufnahmen 34 auf. Diese Gelenkaufnahmen 34 sind in dem dargestellten Ausführungsbeispiel benachbart zum Rand 37 und an der innenliegenden Fläche der Laschen 30 ausgebildet. Es sind zwei Gelenkaufnahmen 34 vorgesehen, die beabstandet zueinander ausgebildet sind. Fig. 4 zeigt, dass in jede Gelenkaufnahme 34 jeweils ein Gelenkzapfen 36 hineinragt. Die Gelenkzapfen 36 sind am Quersteg 35 ausgebildet. Der Quersteg 35 ist durch die Gelenkaufnahme 34 und die Gelenkbolzen 36 gelenkig mit der Lasche 30 verbunden. Die Fig. 4, 5 und 7 zeigen das Kettenglied im geöffneten Zustand. Zum Schließen des Kettengliedes wird der Quersteg 35 in Richtung der gegenüberliegenden Lasche 31 verschwenkt. Hierbei gelangt der in einer Hakenaufnahme 40 der Lasche 31 ausgebildeter Bolzen 41 in die Bolzenaufnahme 44 des am freien Ende des Querstegs 35 vorgesehenen Hakens 39. Bei einer weiteren Bewegung des Querstegs 35 in Richtung Lasche 31 rastet die Hakennase 43 hinter einen an der Lasche 31 ausgebildeten Vorsprung 42, so dass der Quersteg 35 mit der Lasche 31 rastend verbunden ist.

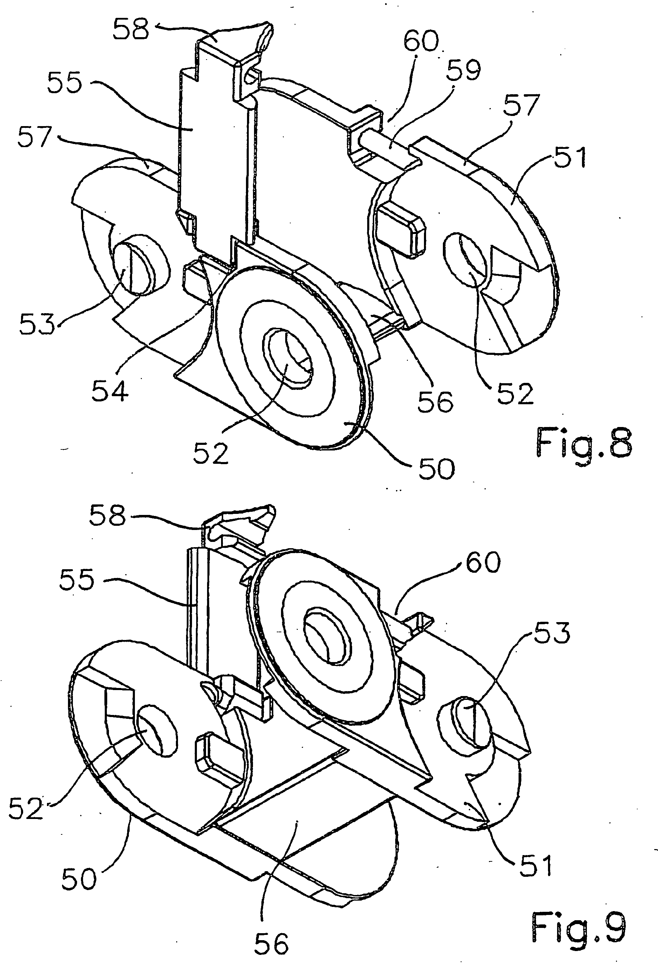

Eine weitere Ausführungsform des erfindungsgemäßen Kettengliedes ist in den Fig. 8 und 9 dargestellt. Der prinzipielle Aufbau des in den Fig. 8 und 9 dargestellten Kettengliedes entspricht dem Kettenglied, wie er in den Fig. 4 bis 7 dargestellt ist.

Das in den Fig. 8 und 9 dargestellte Kettenglied weist zwei beabstandet zueinander angeordnete Laschen 50, 51 auf. Die Laschen 50, 51 sind durch einen Quersteg 56 miteinander verbunden. Jede Lasche 50, 51 weist eine Bohrung 52 und einen Zapfen 53 auf. In die Bohrungen 52 der Laschen 50, 51 gelangen die Zapfen 53 der Laschen eines benachbarten Kettengliedes. Eine Vielzahl solcher Kettenglieder bilden einen Energieführungskette.

Das Kettenglied, wie es in den Fig. 8 und 9 dargestellt ist, weist eine Lasche 51 auf, die vom Längsrand 57 her und in Längsrichtung sowie quer zur Längsrichtung der Lasche eine Ausnehmung 54 aufweist. In den seitlichen Wänden der Ausnehmung 54 sind gegenüberliegend Gelenkaufnahmen ausgebildet. In die Gelenkaufnahmen ragen jeweils Gelenkzapfen hinein, durch die der Quersteg 55 verschwenkbar mit der Lasche 51 verbunden ist. Die Ausformung der Gelenkzapfen, welche in der Fig. 8 und 9 nicht dargestellt sind, erfolgt während der Ausbildung des Querstegs 55.

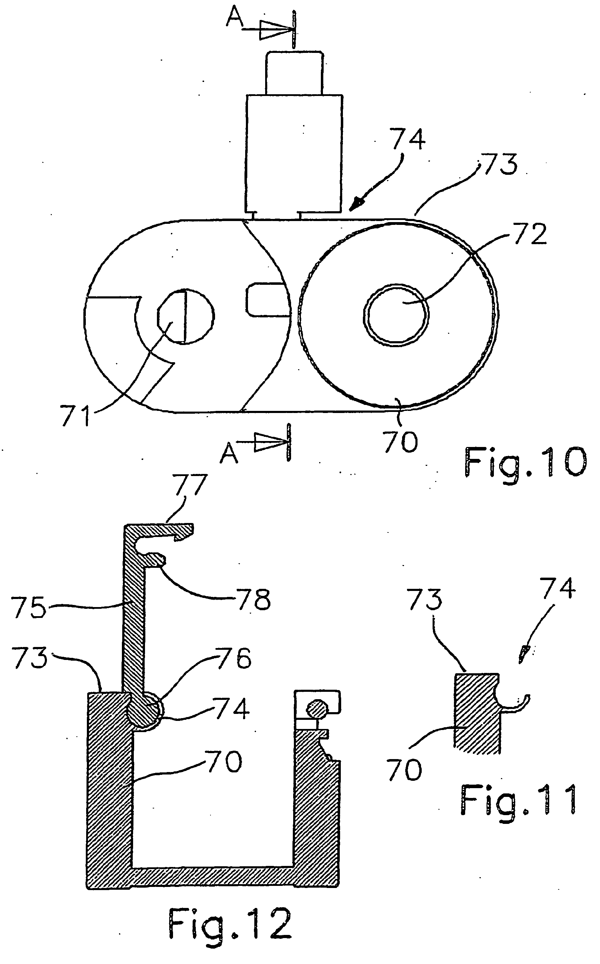

Figur 10 zeigt eine Lasche 70 des Kettengliedes, wobei die Lasche 70 eine Bohrung 72 und einen Zapfen 71 aufweist. Die Bohrung 72 und der Zapfen 71 sind an den gegenüberliegenden Endbereichen der Lasche 70 ausgebildet. Im Rand 73 und in Längsrichtung der Lasche ist eine Gelenkaufnahme 74 ausgebildet, wie dies insbesondere aus der Figur 11 deutlich wird.

Die Gelenkaufnahme 74 weist einen teilkreisförmigen Querschnitt auf. Figur 12 zeigt, dass sich in der Gelenkaufnahme 74 ein Gelenkzapfen 76 befindet, der während der Herstellung des Querstegs 75 ausgebildet worden ist. Der Quersteg 75 ist um einen Winkel von ca. 90 ° verschwenkbar. An dem, dem Gelenkzapfen 76 gegenüberliegenden Ende des Querstegs 75 ist ein Haken 77 ausgebildet, der mit einer gegenüberliegenden Kettenlasche verrastbar ist. Die Verrastung ist vorzugsweise lösbar ausgebildet. Zur Verbesserung der Steifigkeit des Querstegs 75 kann dieser eine Rippe aufweisen.

### Bezugszeichenliste

- 10: Lasche
- 11: Lasche
- 12: Bohrung
- 13: Zapfen
- 14: Ausnehmung
- 15: Quersteg
- 16: Gelenkachse
- 17: Rand
- 18: Quersteg
- 19: Haken
- 20: Hakenaufnahme
- 21: Bolzen
- 22: Vorsprung
- 23: Hakennase
- 24: Bolzenaufnahme
- 30: Lasche
- 31: Lasche
- 32: Bohrung
- 33: Zapfen
- 34: Gelenkaufnahme
- 35: Quersteg
- 36: Gelenkzapfen
- 37: Rand
- 38: Quersteg
- 39: Haken
- 40: Hakenaufnahme
- 41: Bolzen
- 42: Vorsprung
- 43: Hakennase
- 44: Bolzenaufnahme
- 50: Lasche
- 51: Lasche
- 52: Bohrung
- 53: Zapfen
- 54: Ausnehmung
- 55: Quersteg
- 56: Quersteg
- 57: Rand
- 58: Haken
- 59: Bolzen
- 60: Hakenaufnahme
- 70: Lasche
- 71: Zapfen
- 72: Bohrung
- 73: Rand
- 74: Gelenkaufnahme
- 75: Quersteg
- 76: Gelenkzapfen
- 77: Haken
- 78: Rippe

## Patentansprüche

1. Verfahren zur Herstellung eines Kettengliedes aus Kunststoff, das zueinander beabstandete Laschen (10, 11, 30, 31, 50, 51, 70) und diese verbindende untere und obere Querstege (15, 18, 35, 38, 55, 56, 75) aufweist, wobei wenigstens ein Quersteg (15, 35, 55, 75) gelenkig mit einer der Laschen (10, 30, 50, 70) verbunden ist, **dadurch gekennzeichnet, daß** bei dem Verfahren zunächst wenigstens eine der Laschen (10, 30, 50, 70) und danach wenigstens einer der Querstege (15, 35, 55, 75) bei gleichzeitiger Ausformung einer Gelenkverbindung zwischen einer der Laschen (10, 30, 50, 70) und einem der Querstege (15, 35, 55, 75) gebildet wird.

2. Verfahren nach Anspruch 1, bei dem zunächst eine Lasche (10) mit einer Gelenkachse (16) gebildet wird, die während der Ausbildung des Quersteges (15) über einen Umfangswinkel, der größer ist als 180°, von diesem umgeben wird.

3. Verfahren nach Anspruch 2, bei dem die Gelenkachse (16) in einer Ausnehmung (16) ausgebildet wird.

4. Verfahren nach Anspruch 1, bei dem zunächst eine Lasche (30, 50, 70) mit wenigstens einer sich in Längsrichtung der Lasche (30, 50, 70) erstreckenden Gelenkaufnahmen (34, 74) gebildet wird, in der während der Ausbildung des Quersteges (35, 55, 75) wenigstens ein Gelenkzapfen (36, 76) ausgeformt wird.

5. Verfahren nach Anspruch 4, bei dem in der Lasche (30, 50) gegenüberliegende Gelenkaufnahmen (34) gebildet werden, in denen während der Ausbildung des Quersteges (35, 55) jeweils ein Gelenkzapfen (36) ausgeformt wird.

6. Verfahren nach Anspruch 4, bei dem in der Lasche (70) eine im Querschnitt teilkreisförmige Gelenkaufnahme (74) ausgebildet wird, deren Umfangswinkel größer 180° und kleiner 360° ist.

7. Verfahren nach Anspruch 6, bei dem in der Lasche (70) eine im Querschnitt teilkreisförmige Gelenkaufilahme (74) ausgebildet wird, deren Umfangswinkel ca. 270° ist.

8. Verfahren nach einem der Ansprüche 1 bis 7, bei dem die Laschen (10, 11, 30, 31, 50, 51) und ein Quersteg (18, 38, 56) ein einstückiges U-förmiges Teil bilden.

9. Verfahren nach einem der Ansprüche 1 bis 7, bei dem die Laschen (10, 11, 30, 31, 50, 51, 70) und/oder die Querstege (15, 18, 35, 38, 55, 56, 75) gleich ausgebildet sind.

10. Verfahren nach einem der Ansprüche 1 bis 9, bei dem der wenigstens ein Quersteg (15, 35, 55, 75) nach dem Zweikomponenten-Spritzverfahren unter gleichzeitiger Ausformung der Gelenkverbindung zwischen einer der Laschen (10, 30, 50, 70) und einem der Querstege (15, 35, 55, 75) gebildet wird.

11. Verfahren nach einem der Ansprüche 1 bis 10, bei dem die Laschen (10, 11, 30, 31, 50, 51, 70) und/oder wenigstens ein Quersteg (15, 18, 35, 38, 55, 56, 75) mindestens teilweise aus unterschiedlichen Kunststoffen gebildet werden.

12. Verfahren nach Anspruch 11, bei dem die Laschen (10, 11, 30, 31, 50, 51, 70) und gegebenenfalls ein Quersteg (15, 18, 35, 38, 55, 56, 75) aus einem Kunststoff ausgewählt aus der Gruppe der Polyamide gebildet werden.

13. Verfahren nach Anspruch 11 oder 12, bei dem die Laschen (10,11,30,31, 50, 51, 70) und gegebenenfalls ein Quersteg (15, 18; 35, 38, 55, 56, 75) aus einem Kunststoff ausgewählt aus der Gruppe der Polyacetale gebildet werden.

14. Kettenglied aus Kunststoff für eine Energieführungskette, das zueinander beabstandete Laschen (10, 11) und diese verbindende untere und obere Querstege (15, 18) aufweist, wobei wenigstens ein Quersteg (15) gelenkig mit einer der Laschen (10) verbunden ist, **dadurch gekennzeichnet, dass** ein Abschnitt des Querstegs (15) eine an der Lasche (10) ausgebildete Gelenkachse (16) nahtlos umgibt.

15. Kettenglied aus Kunststoff für eine Energieführungskette, das zueinander beabstandete Laschen (10, 11, 30, 31, 50, 51, 70) und diese verbindende untere und obere Querstege (15, 18, 35, 38, 55, 56, 75) aufweist, wobei wenigstens ein Quersteg (15, 35, 55, 75) gelenkig mit einer der Laschen (10, 30, 50, 70) verbunden ist, nach Anspruch 14, **dadurch gekennzeichnet, dass** wenigstens ein Abschnitt eines Quersteges (15, 35, 55, 75) bei gleichzeitiger Ausformung einer Gelenkverbindung mit einer der Laschen (10,30, 50, 70) gebildet ist.

16. Kettenglied nach Anspruch 15, **dadurch gekennzeichnet, dass** der Abschnitt eine Gelenkachse (16) der Lasche (10) über einen Umfangswinkel, der größer ist als 180°, umgibt.

17. Kettenglied nach Anspruch 15, **dadurch gekennzeichnet, dass** eine Lasche (30, 50, 70) wenigstens eine sich in Längsrichtung der Lasche (30, 50, 70) erstreckende Gelenkaufnahme (34, 74) aufweist, in die ein Gelenkzapfen (36, 76) hineinragt, der während der Ausbildung des Quersteges (35, 55, 75) ausgeformt wird.

18. Kettenglied nach Anspruch 17, **dadurch gekennzeichnet, dass** die Lasche (30, 50) zwei gegenüberliegende Gelenkaufnahmen (34) aufweist, in die jeweils ein Gelenkzapfen (36) wenigsten teilweise hineinragt, wobei die Gelenkzapfen (36) während der Ausbildung des Quersteges (35, 55) geformt sind.

19. Kettenglied nach einem der Ansprüche 14 bis 18, **dadurch gekennzeichnet, dass** die Laschen (10, 11, 30, 31, 50, 51, 70) und ein Quersteg (15, 18, 35, 38, 55, 56, 75) ein einstückiges U-förmiges Teil bilden.

20. Kettenglied nach einem der Ansprüche 14 bis 19, **dadurch gekennzeichnet, dass** der wenigstens eine Quersteg (15, 35, 55, 75) nach dem Zweikomponenten-Spritzverfahren unter gleichzeitiger Ausformung der Gelenkverbindung zwischen einer der Laschen (10, 30, 50, 70) und einem der Querstege (15, 35, 55,75) gebildet ist.

21. Kettenglied nach einem der Ansprüche 14 bis 20, **dadurch gekennzeichnet, dass** die Laschen (10, 11, 30, 31, 50, 51, 70) und der wenigstens eine Quersteg (15, 18, 35, 38, 55, 56, 75) mindestens teilweise aus unterschiedlichen Kunststoffen gebildet sind.

22. Kettenglied nach Anspruch 21, **dadurch gekennzeichnet, dass** die Laschen (10, 11, 30, 31, 50, 51, 70) und gegebenenfalls ein Quersteg (15, 18, 35, 38, 55, 56, 75) aus einem Kunststoff ausgewählt aus der Gruppe der Polyamide gebildet sind.

23. Kettenglied nach Anspruch 22 oder 23, **dadurch gekennzeichnet, dass** die Laschen (10, 11, 30, 31, 50, 51, 70) und gegebenenfalls ein Quersteg (15, 18, 35, 38, 55, 56, 75) aus einem Kunststoff ausgewählt aus der Gruppe der Polyacetale gebildet sind.

## Claims

1. Method for the production of a plastic chain link, having spaced plates (10, 11, 30, 31, 50, 51, 70) and lower and upper crosspieces (15, 18, 35, 38, 55, 56, 75) connecting them, in which at least one crosspiece (15, 35, 55, 75) is articulated to a plate (10, 30, 50, 70), **characterized in that** the method comprises forming at least one of the plates (10, 30, 50, 70) and then at least one of the crosspieces (15, 35, 55, 75) during simultaneous formation of a link connection between one of the plates (10, 30, 50, 70) and one of the crosspieces (15, 35, 55, 75).

2. Method according to claim 1, in which initially one plate (10) is formed with a link axis (10), which, during formation of the crosspiece (15), is enclosed by it by a peripheral angle greater than 180°.

3. Method according to claim 2, in which the link axis (16) is formed in a recess (16).

4. Method according to claim 1, in which initially a plate (30, 50, 70) is formed with at least one link mount (34, 74) extending in the longitudinal direction of the plate (30, 50, 70), in which at least one link pivot (36, 76) is formed during formation of the crosspiece (35, 55, 75).

5. Method according to claim 4, in which opposite link mounts (34) are formed in the plate (30, 50), in which a link pivot (36) is formed during formation of the crosspiece (35, 55).

6. Method according to claim 4, in which a link mount (74) with a partially circular cross section is formed in the plate (70), whose peripheral angle is greater than 180° and smaller than 360°.

7. Method according to claim 6, in which a link mount (74) with a partially circular cross section is formed in the plate (70), whose peripheral angle is about 270°.

8. Method according to one of the claims 1 to 7, in which the plates (10, 11, 30, 31, 50, 51) and a crosspiece (18, 38, 56) form a one-piece U-shaped part.

9. Method according to one of the claims 1 to 7, in which the plates (10, 11, 30, 31, 50, 51, 70) and/or the crosspieces (15, 18, 35, 38, 55, 56, 75) are similarly designed.

10. Method according to one of the claims 1 to 9, in which the at least one crosspiece (15, 35, 55, 75) is formed according to the two-component injection molding method, with simultaneous formation of the link connection between one of the plates (10, 30, 50, 70) and one of the crosspieces (15, 35, 55, 75).

11. Method according to one of the claims 1 to 10, in which the plates (10, 11, 30, 31, 50, 51, 70) and/or at least one crosspiece (15, 18, 35, 38, 55, 56, 75) are formed at least partially from different plastics.

12. Method according to claim 11, in which the plates (10, 11, 30, 31, 50, 51, 70) and optionally one crosspiece (15, 18, 35, 38, 55, 56, 75) are formed from a plastic chosen from the group of polyamides.

13. Method according to claim 11 or 12, in which the plates (10, 11, 30, 31, 50, 51, 70) and optionally one crosspiece (15, 18, 35, 38, 55, 56, 75) are formed from a plastic chosen from the group of polyacetals.

14. Plastic chain link for a power chain, having spaced plates (10, 11) and lower and upper crosspieces (15, 18) connecting them, in which at least one crosspiece (15) is articulated to one of the plates (10), **characterized in that** a section of the crosspiece (15) seamlessly encloses a link axis (16) formed on plate (10).

15. Plastic chain link for a power chain, having spaced plates (10, 11, 30, 31, 50, 51, 70) an lower and upper crosspieces (15, 18, 35, 38, 55, 56, 75) connecting them, in which at least one crosspiece (15, 35, 55, 75) is articulated to one of the plates (10, 30, 50, 70) according to claim 14, **characterized in that** at least one section of a crosspiece (15, 35, 55, 75) is formed during simultaneous formation of a link connection with one of the plates (10, 30, 50, 70).

16. Chain link according to claim 15, **characterized in that** the section encloses a link axis (16) of plate (10) over a peripheral angle greater than 180°.

17. Chain link according to claim 15, **characterized in that** a plate (30, 50, 70) has at least one link mount (34, 74) extending in the longitudinal direction of the plate (30, 50, 70), into which a link pivot (36, 76) extends, which is formed during formation of crosspiece (35, 55, 75).

18. Chain link according to claim 17, **characterized in that** the plate (30, 50) has two opposite link mounts (34), into which a link pivot (36) extends at least partially, in which the link pivots(36) are formed during formation of the crosspiece (35, 55).

19. Chain link according to one of the claims 14 to 18, **characterized in that** the plates (10, 11, 30, 31, 50, 51, 70) and a crosspiece (15, 18, 35, 38, 55, 56, 75) form a one-piece, U-shaped part.

20. Chain link according to one of the claims 14 to 19, **characterized in that** the at least one crosspiece (15, 35, 55, 75) is formed according to the two-component injection molding method, with simultaneous formation of the link connection between one of the plates (10, 30, 50, 70) and one of the crosspieces (15, 35, 55, 75).

21. Chain link according to one of the claims 14 to 20, **characterized in that** the plates (10, 11, 30, 31, 50, 51, 70) and the at least one crosspiece (15, 18, 35, 38, 55, 56, 75) are formed at least partially from different plastics.

22. Chain link according to claim 21, **characterized in that** the plates (10, 11, 30, 31, 50, 51, 70) and optionally one crosspiece (15, 18, 35, 38, 55, 56, 75) are formed from a plastic chosen from the group of polyamides.

23. Chain link according to claim 22 or 23, **characterized in that** the plates (10, 11, 30, 31, 50, 51, 70) and optionally one crosspiece (15, 18, 35, 38, 55, 56, 75) are formed from a plastic chosen from the group ofpolyacetals.

## Revendications

1. Procédé pour fabriquer un maillon de chaîne en matière plastique qui a des joues (10, 11, 30, 31, 50, 51, 70) à distance les unes des autres et des traverses inférieures et supérieures (15, 18, 35, 38, 55, 56, 75) les reliant, au moins une traverse (15, 35, 55. 75) étant reliée de manière articulée à l'une des joues (10, 30, 50, 70), **caractérisé en ce que** dans le procédé on forme d'abord au moins une des joues (10, 30, 50, 70) et ensuite au moins une des traverses (15, 35, 55, 75) durant la formation simultanée d'un joint d'articulation entre l'une des joues (10, 30, 50, 70) et l'une des traverses (15, 35, 55, 75).

2. Procédé selon la revendication 1, dans lequel on forme d'abord une joue (10) avec un axe d'articulation (16) qui durant la formation de la traverse (15) est entouré par un angle circonférentiel, plus grand que 180°, par celle-ci.

3. Procédé selon la revendication 2, dans lequel l'axe d'articulation (16) est formé dans un dégagement (16).

4. Procédé selon la revendication 1, dans lequel on forme d'abord une joue (30, 50, 70) avec au moins un logement d'articulation (34, 74) s'étendant en direction longitudinale de la joue (30, 50, 70), logement, dans lequel durant la réalisation de la traverse (35, 55, 75) au moins un pivot (36, 76) est formé.

5. Procédé selon la revendication 4, dans lequel des logements d'articulation (34) opposés sont formés dans la joue (30, 50), dans lesquels respectivement un pivot (36) est formé durant la formation de la traverse (35, 55).

6. Procédé selon la revendication 4, dans lequel un logement d'articulation (74) avec une section transversale partiellement circulaire est formé dans la joue (70), logement d'articulation, dont l'angle circonférentiel est plus grand que 180° et plus petit que 360°.

7. Procédé selon la revendication 6, dans lequel un logement d'articulation (74) avec une section transversale partiellement circulaire est formé dans la joue (70), logement d'articulation, dont l'angle circonférentiel est environ 270°.

8. Procédé selon l'une des revendications 1 à 7, dans lequel les joues (10, 11, 30, 31, 50, 51) et une traverse (18, 38, 56) sont réalisées en forme de U d'un seul tenant les unes avec les autres.

9. Procédé selon l'une des revendications 1 à 7, dans lequel les joues (10, 11, 30, 31, 50, 51, 70) et/ou les traverses (15, 18, 35, 38, 55, 56, 75) sont réalisées de manière uniforme.

10. Procédé selon l'une des revendications 1 à 9, dans lequel l'au moins une traverse (15, 35, 55, 75) est formée selon le procédé de moulage par injection de deux composants durant la formation simultanée du joint d'articulation entre l'une des joues (10, 30, 50, 70) et l'une des traverses (15, 35, 55, 75).

11. Procédé selon l'une des revendications 1 à 10, dans lequel les joues (10, 11, 30, 31, 50, 51, 70) et/ou au moins une traverse (15, 18, 35, 38, 55, 56, 75) sont réalisées au moins partiellement de matières plastiques différentes.

12. Procédé selon la revendication 11, dans lequel les joues (10, 11, 30, 31, 50, 51, 70) et le cas échéant une traverse (15, 18, 35, 38, 55, 56, 75) sont formées d'une matière plastique choisie parmi le groupe des polyamides.

13. Procédé selon la revendication 11 ou 12, dans lequel les joues (10, 11, 30, 31, 50, 51, 70) et le cas échéant une traverse (15, 18, 35, 38, 55, 56, 75) sont formées d'une matière plastique choisie parmi le groupe des polyacétals.

14. Maillon de chaîne en matière plastique pour une chaîne d'énergie qui présente des joues (10, 11) à distance les unes des autres et des traverses (15, 18) inférieures et supérieures reliant celles-ci, au moins une traverse (15) étant reliée de manière articulée à l'une des joues (10), **caractérisé en ce qu'**une section de la traverse (15) entoure sans couture un axe d'articulation (16) formé sur la joue (10).

15. Maillon de chaîne en matière plastique pour une chaîne d'énergie qui a des joues (10, 11, 30, 31, 50, 51, 70) à distance les unes des autres et des traverses inférieures et supérieures (15, 18, 35, 38, 55, 56, 75) reliant celles-ci, au moins une traverse (15, 35, 55, 75) étant reliée de manière articulée à l'une des joues (10, 30, 50, 70) selon la revendication 14, **caractérisé en ce qu'**au moins une section d'une traverse (15, 35, 55, 75) est formée durant la formation simultanée d'un joint d'articulation avec l'une des joues (10, 30, 50, 70).

16. Maillon de chaîne selon la revendication 15, **caractérisé en ce que** la section entoure un axe d'articulation (16) de la joue (10) suivant un angle circonférentiel qui est plus grand que 180°.

17. Maillon de chaîne selon la revendication 15, **caractérisé en ce qu'**une joue (30, 50, 70) a au moins un logement d'articulation (34, 74) s'étendant en direction longitudinale de la joue (30, 50, 70), logement d'articulation, dans lequel s'étend un pivot (36, 76) qui est formé durant la formation de la traverse (35, 55, 75).

18. Maillon de chaîne selon la revendication 17, **caractérisé en ce que** la joue (30, 50) a deux logements d'articulation opposés (34), dans lesquels s'étend respectivement au moins partiellement un pivot (36), les pivots (36) étant formés durant la formation de la traverse (35, 55).

19. Maillon de chaîne selon l'une des revendications 14 à 18, **caractérisé en ce que** les joues (10,11,30,31,50,51, 70) et une traverse (15,18, 35, 38, 55, 56, 75) sont réalisées en forme de U d'un seul tenant les unes avec les autres.

20. Maillon de chaîne selon l'une des revendications 14 à 19, **caractérisé en ce que** l'au moins une traverse (15, 35, 55, 75) est formée selon le procédé de moulage par injection de deux composants avec la formation simultanée du joint d'articulation entre l'une des joues (10, 30, 50, 70) et l'une des traverses (15, 35, 55, 75).

21. Maillon de chaîne selon l'une des revendications 14 à 20, **caractérisé en ce que** les joues (10, 11, 30, 31, 50, 51, 70) et l'au moins une traverse (15,18, 35, 38, 55, 56, 75) sont formées au moins partiellement de matières plastiques différentes.

22. Maillon de chaîne selon la revendication 21, **caractérisé en ce que** les joues (10, 11, 30, 31, 50, 51, 70) et le cas échéant une traverse (15, 18, 35, 38, 55, 56, 75) sont formées d'une matière plastique choisie parmi le groupe des polyamides.

23. Maillon de chaîne selon la revendication 22 ou 23, **caractérisé en ce que** les joues (10, 11, 30, 31, 50, 51, 70) et le cas échéant une traverse (15, 18, 35, 38, 55, 56, 75) sont formées d'une matière plastique choisie parmi le groupe des polyacétals.
